# EUROPEAN PATENT APPLICATION

(11) **EP 2 095 973 A1**
(43) Date of publication of application: **02.09.2009**
(21) Application number: 07832209.6
(22) Date of filing: 20.11.2007
(51) Int. Cl.: B60C 9/18

(54) **PNEUMATIC TIRE FOR TWO-WHEELED VEHICLE**

(30) Priority: 20.12.2006 JP 2006342547
(71) Applicant: Bridgestone Corporation, Tokyo 104-8340 (JP)
(72) Inventor: TERADA, Kouji, Kodaira-shi Tokyo 187-8531 (JP)
(74) Representative: Whalley, Kevin
(86) International application number: PCT/JP2007/072479
(87) International publication number: WO 2008/075523

(57) **Abstract**

The present invention provides a pneumatic tire for a motorcycle, which tire is capable of improving both stability in running straight at a relatively high speed and gripping properties in cornering at the same time. The pneumatic tire for a motorcycle, comprises: a dual layered slant belt 16L, 16U constituted of two cord-crossing layers in which cords of respective layers cross each other, the slant belt being disposed on the outer side in the tire radial direction of a carcass 14; an outermost belt layer 20 of which a cord angle with respect to the tire equatorial plane is no smaller than 70 degrees; and a "0 degree" belt 18 provided between the outermost belt layer 20 and the dual layered slant belt and having cords extending substantially in the tire circumferential direction. A first belt layer 16L on the inner side in the tire radial direction of the two layers 16L, 16U of the slant belt is divided into two in the tire widthwise direction and the resulting two divided portions are disposed at respective side portions in the tire widthwise direction of the tire. As a result, good stability in running straight at a relatively high speed is ensured by the tire center portion 10C and good gripping properties in cornering are ensured by the side portions 10SA, 10SB in the tire widthwise direction.

## Description

### Technical Field

The present invention relates to a pneumatic tire for a motorcycle, and in particular, to a pneumatic tire for a motorcycle suitable for use in a motorcycle of high emission, which runs fast.

### Prior Art

In recent years, there has been a tendency of making motorcycles increasingly faster. Due to this, it has been necessitated to achieve better running stability in running at a relatively high speed. Further, it is becoming important that such a fast running motorcycle can run at a higher cornering speed than before in a circuit running or the like (see EP 1072443, JP 06 127214, JP 08 001122).

With regard to stability at a relatively high speed, it has been known that stability at a relatively high speed is significantly improved by providing a tire with what is called a "0 degree" belt layer constituted of belt cords wound in the tire circumferential direction, i.e. a belt layer in which cords are disposed at an angle (cord angle) of substantially 0 degree with respect to the tire equatorial plane.

Further, it is known that, in order to improve gripping properties in cornering, provision of a "0-45 degrees" crossing belt layer, i.e. a cord-crossing belt layer in which the cord angle with respect to the tire circumferential direction is in a range of 0-45 degrees, is effective.

However, in a case in which a "0 degree" belt is disposed on the outer side in the tire radial direction of a crossing belt layer having cord angle in a range of 0-45 degrees, rigidity when the motorcycle stands upright is too high to ensure stability. Further, in such a case, there also arises a problem that riding comfort tends to deteriorate.

### Disclosure of the Invention

### Problems to be solved by the Invention

In view of the aforementioned facts, an object of the present invention is to provide a pneumatic tire for a motorcycle, which tire is capable of improving both stability in running straight at a relatively high speed and gripping properties in cornering at the same time.

### Means for solving the Problems

In a first aspect of the present invention, a pneumatic tire for a motorcycle comprises: a carcass constituted of at least one carcass ply provided in a toroidal shape over a pair of bead cores; a dual layered slant belt constituted of two cord-crossing layers in which cords of respective layers cross each other, the slant belt being disposed on the outer side in the tire radial direction of the carcass; an outermost belt layer of which belt has a cord angle of no smaller than 70 degrees with respect to the tire equatorial plane; and a circumferential direction belt layer provided between the outermost belt layer and the dual layered slant belt and having cords extending substantially in the tire circumferential direction, wherein at least a first belt layer on the inner side in the tire radial direction of the two layers of the slant belt is divided into two in the tire widthwise direction and thus constituted of two divided portions disposed at respective side portions in the tire widthwise direction of the tire.

The angle (cord angle) formed by cords of the circumferential direction belt layer with respect to the tire equatorial plane is, in view of production tolerance, in a range of 0 to 5 degrees.
The circumferential direction belt layer can be formed, for example, by spirally winding a belt-shaped rubber-coated cord ribbon, in which a single or plural juxtaposed cords are embedded in a coating rubber, on the tire at a winding angle in a range of 0 to 5 degrees with respect to the tire equatorial plane.

In order to ensure running stability during straight running, it is effective to provide a slant belt layer having a relatively large cord angle.
On the other hand, in order to improve gripping properties in cornering at the respective side portions in tire widthwise direction of the tire, it is effective to make the cord angle of the slant belt layer relatively small, to increase rigidity of the slant belt layer and thus enhance camber thrust.

Accordingly, in the pneumatic tire for a motorcycle of the first aspect of the present invention, the first belt layer as the inner layer of the slant belt layers is designed to have a divided structure where the first belt layer is divided into two portions in the tire widthwise direction, such that a single slant belt layer and the circumferential direction belt layer are characteristically disposed at the tire widthwise direction center portion which constitutes the vicinities of the tire equatorial plane and the two slant belt layers are characteristically disposed at the respective side portions in the tire widthwise direction of the tire.
Due to the structure as described above, good running stability in running straight at a relatively high speed is ensured by the tire center portion in the widthwise direction and good gripping properties in cornering are ensured by the respective tire side portions in the widthwise direction of the tire.
As a result, in the pneumatic tire for a motorcycle, stability in running straight at a relatively high speed and gripping properties in cornering can be improved simultaneously.

In the tire widthwise direction center portion, the width in the peripheral direction of a region where the first belt layer is not formed, i.e. the width along the peripheral direction of a region between respective ends on the tire center side, of the respective divided portions of the first belt layer, is preferably within a range of 25 to 75% of the width in the peripheral direction of a tread portion.
In a case in which the aforementioned width in the peripheral direction of the region is narrower than 25% of the width in the peripheral direction of the tread portion, it may be difficult to ensure good running stability in running straight at a relatively high speed. In a case in which the aforementioned width in the peripheral direction of the region is wider than 75% of the width in the peripheral direction of the tread portion, it may be difficult to ensure good gripping properties in cornering.

In the present specification, the "width along the peripheral direction of a region between respective ends on the tire center side, of the respective divided portions of the divided first belt layer", represents a substantially arcuate contour width along the outer periphery of the region in a section in the tire widthwise direction, and the "width in the peripheral direction of a tread" represents a substantially arcuate contour width along the outer periphery of the tread.

Due to the above-described structure of the tire widthwise direction center portion, good riding comfort (impact absorbing properties) is ensured.

In a second aspect of the present invention, the respective ends on the tire center side of the respective divided portions of the first belt layer divided into two overlap respective end portions in the tire widthwise direction of the circumferential direction belt layer.

Due to the structure described above, stepwise difference in rigidity in the tire axial direction (tire widthwise direction) of the dual layered slant belt can be made relatively small.
In order to significantly obtain this effect, it is preferable that respective widths of the overlapping portions are within a range of 5 to 20% of the width in the peripheral direction of the tread portion.

In a third aspect of the present invention, in the respective divided portions of the first belt layer divided into two, cords of one divided portion are inclined clockwise with respect to the tire equatorial plane, while cords of the other divided portion are inclined anticlockwise with respect to the tire equatorial plane.
Due to the structure described above, it is possible to equalize the gripping properties in cornering on the respective sides in the tire widthwise direction of the tire.

Preferably, the cords of one divided portion and the cords of the other divided portion of the first belt layer divided into two are inclined substantially symmetrical with respect to the tire equatorial plane.

In a fourth aspect of the present invention, a cord angle at which the cords of each divided portion, of the first belt layer divided into two, are inclined with respect to the tire equatorial plane is set within a range of 25 to 60 degrees.

Due to the structure described above, in-plane bending rigidity of the cord-crossing belt is enhanced, whereby camber thrust in cornering can be increased.

### Effect of the Invention

According to the present invention, there can be obtained a pneumatic tire for a motorcycle, in which stability in running straight at a relatively high speed and gripping properties in cornering are simultaneously improved in a compatible manner.

### Brief Description of the Drawings

Fig. 1 is a sectional view in the tire widthwise direction of a pneumatic tire for a motorcycle according to an embodiment of the present invention.
Fig. 2 is a schematic plan view of a belt, showing cord angles of the first belt layer constituting the slant belt of a pneumatic tire for a motorcycle according to the embodiment of the present invention.
Fig. 3 is a sectional view in the tire widthwise direction of the tire of Conventional Example 1 used in the examples.
Fig. 4 is a sectional view in the tire widthwise direction of the tire of Conventional Example 2 used in the examples.

### Explanation of Reference Numerals

- 10: Pneumatic tire for motorcycle
- 10SA: Tire widthwise direction side portion (one of respective side portions in tire widthwise direction)
- 10SB: Tire widthwise direction side portion (the other of respective side portions in tire widthwise direction)
- 12: Bead core
- 14: Carcass
- 17A: End
- 17B: End
- 16L, 16U: Slant belt layer
- (16L: First belt layer)
- 18: "0 Degree" belt layer (circumferential direction belt layer)
- 20: Outermost layer belt
- 30A: Cord
- 30B: Cord
- θA: Cord angle
- θB: Cord angle
- 74: Carcass
- 76L, 76U: Second belt layer
- (76L: First belt layer)
- 78: "0 Degree" belt layer (circumferential direction belt layer)
- 80: Outermost layer belt
- 86L: First belt layer

### Best Mode for carrying out the Invention

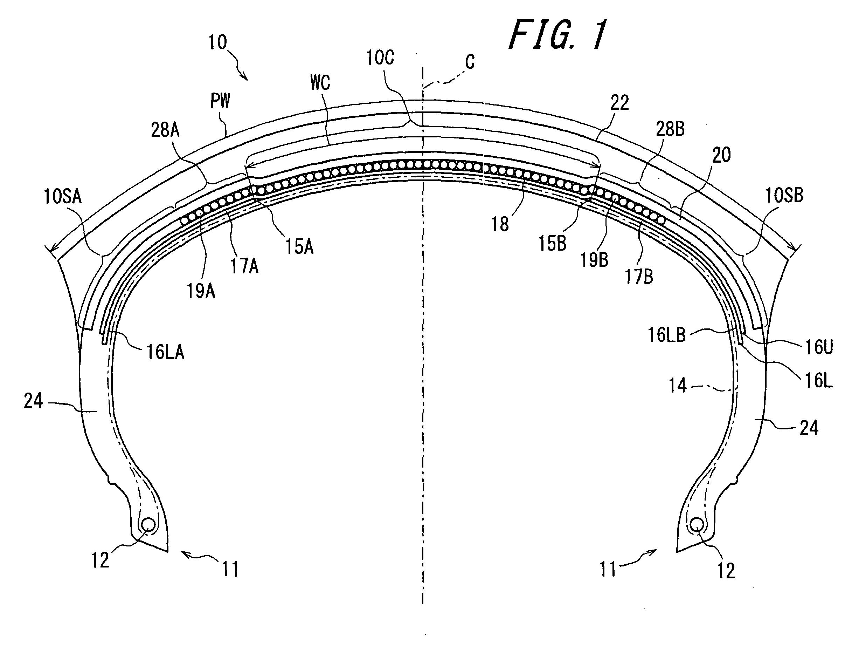

Hereinafter, an embodiment of the present invention will be described with reference to an example thereof.
As shown in Fig. 1, which is a sectional view in the tire widthwise direction, a pneumatic tire 10 for a motorcycle according to the present embodiment includes: a carcass 14 constituted of at least one carcass ply provided in a toroidal shape over respective bead cores 12 of a pair of bead portions 11; a dual layered slant belt 16L, 16U constituted of two cord-crossing layers in which cords of respective layers cross each other, the dual layered slant belt being disposed on the outer side in the tire radial direction of the carcass 14; an outermost belt layer 20 of which belt has a cord angle of no smaller than 70 degrees with respect to the tire equatorial plane; and a "0-degree" belt layer 18 disposed between the outermost belt layer 20 and the slant belt 16L, 16U and having cords continually extending in the tire circumferential direction.
When the "0 degree" belt layer 18 is formed, a belt-shaped and rubber-coated cord ribbon, in which plural juxtaposed cords are embedded in coating rubber, is wound on the tire in the tire circumferential direction and then the ribbon thus wound is vulcanization- molded.
Further, sidewall portions 24 are formed on the outer side of the tire between the bead portions 11 and the tread 22.

The dual layered slant belt 16L, 16U is constituted of a first belt layer 16L disposed on the inner side in the tire radial direction and a second belt layer 16U disposed in the outer side in the tire radial direction of the first belt layer 16L.
The first belt layer 16L is divided into two divided portions 16LA, 16LB, which are respectively disposed on respective sides in the tire widthwise direction of the tire. Accordingly, the first belt layer 16L is not disposed at the tire widthwise direction center portion 10C.

Due to the structure described above, a single layer of the second belt layer 16U and the "0 degree" belt layer 18 are characteristically disposed at the tire widthwise direction center portion 10C, while the two belt layers, i.e. the first belt layer 16L and the second belt layer 16U, are characteristically disposed at the side portions 10SA, 10SB in the tire widthwise direction of the tire. Due to the structure as described above, good running stability in running straight at a relatively high speed is ensured by the tire center portion 10C in the widthwise direction and good gripping properties in cornering are ensured by the respective tire side portions 10SA, 10SB in the widthwise direction.
As a result, there can be obtained a pneumatic tire 10 for a motorcycle, in which stability in running straight at a relatively high speed and gripping properties in cornering are improved in a compatible manner. Further, by the aforementioned structure, good riding comfort (impact absorbing properties) is ensured.

In the tire widthwise direction center portion 10C, the width WC (see Fig. 1) in the peripheral direction of a region where the first belt layer 16L is not formed, i.e. the width along the peripheral direction of a region between the end 15A on the tire center side of the one half portion 16LA of the first belt layer and the end 15B on the tire center side of the other half portion 16LB of the first belt layer, is preferably within a range of 25 to 75% of the width PW in the peripheral direction of a tread portion 22.
Due to the structure described above, good stability in running straight at a relatively high speed and good gripping properties in cornering can be both ensured in a satisfactory manner.

Further, in the present embodiment, the end portion 17A on the tire center side of the one half portion 16LA of the first belt layer and the one end portion 19A in the tire widthwise direction of the "0 degree" belt layer 18 form an overlapping portion 28A and the end portion 17B on the tire center side of the other half portion 16LB of the first belt layer and the other end portion 19B in the tire widthwise direction of the "0 degree" belt layer 18 form an overlapping portion 28B.
Due to the structure described above, stepwise difference in rigidity in the tire widthwise direction, observed in the dual layered slant belt 16L, 16U, is alleviated.

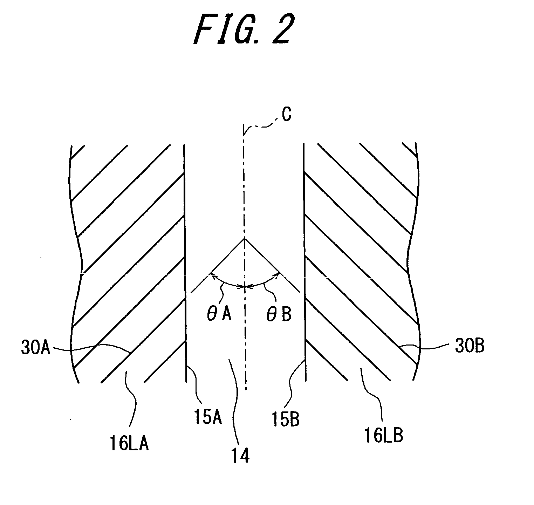

Further, as shown in Fig. 2, regarding cords of the first belt layer 16L, cords of the one half or divided portion 16LA are inclined clockwise with respect to the tire equatorial plane, while cords of the other half or divided portion 16LB are inclined anticlockwise with respect to the tire equatorial plane.
More specifically, the cords 30A constituting the one half portion 16LA of the first belt layer are inclined clockwise with respect to the tire equatorial plane by an angle θA (which angle will be referred to as "cord angle θA" hereinafter) and the cords 30B constituting the other half portion 16LB of the first belt layer are inclined anticlockwise with respect to the tire equatorial plane by an angle θB (which angle will be referred to as "cord angle θB" hereinafter).
In the present embodiment, the cord angle θA and the cord angle θB are set in a range of 25 to 60 degrees, respectively. The cords 30A and the cords 30B are inclined substantially symmetrical with respect to the tire equatorial plane C.

Due to the structure described above, the cord angles of the first belt layer 16L (i.e. the cord angle of the one half portion 16LA and the cord angle of the other half portion 16LB of the first belt layer), when force is exerted thereon from a road surface, are equal in the camber angle on the left side and the camber angle on the right side, so that the characteristics of camber thrust thus generated at a left cornering do not so significantly vary from those generated at a right cornering.

### <Examples>

In order to confirm the effects caused by the present invention, the inventors of the present invention prepared an example of the pneumatic tire 10 for a motorcycle according to the aforementioned embodiment (which will be referred to as "Example tire" hereinafter) and two examples of the conventional pneumatic tire for a motorcycle (which will be referred to as "Conventional Example 1 tire" and "Conventional Example 2 tire" hereinafter), and carried out performance tests to evaluate performances of the tires. All of the tires thus prepared had the same size of 190/50ZR17M/C.

In the Example tire, the cord angle θA and the cord angle θB are both 45 degrees and the cords 30A and the cords 30B are inclined symmetrical with respect to the tire equatorial plane C. The angle formed by the cords constituting the second belt layer 16U with respect to the tire equatorial plane is 15 degrees. The angle formed by the cords constituting the "0 degree" belt layer 18 with respect to the tire equatorial plane is 0 degree. The angle formed by the cords constituting the outermost belt layer 20 with respect to the tire equatorial plane is 90 degrees.

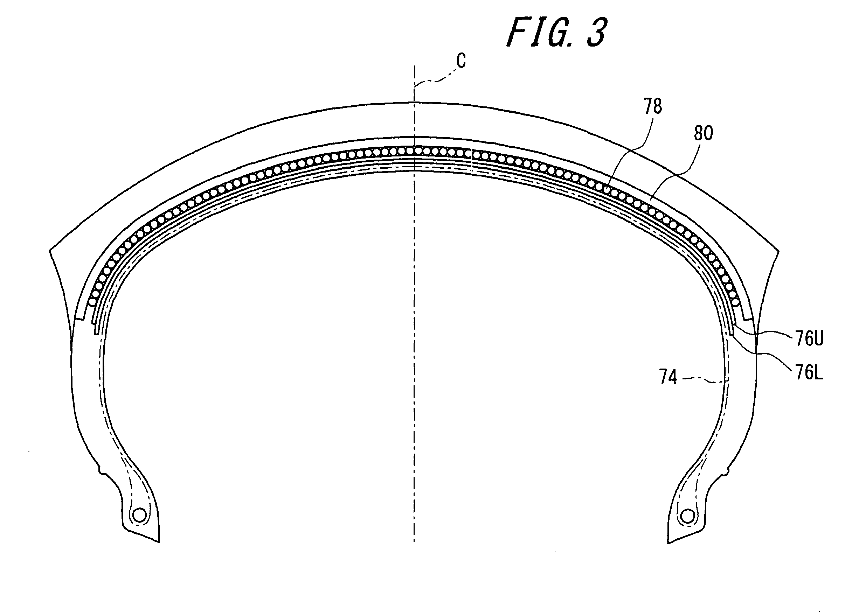

The Conventional Example 1 tire is, as shown in Fig. 3, a tire having: a carcass 74; slant belt layers 76L, 76U constituted of a first belt layer 76L and a second belt layer 76U and disposed on the outer side in the tire radial direction of the carcass 74; a "0 degree" belt layer 78 disposed on the outer side in the tire radial direction of the slant belt layers; and an outermost belt layer 80 disposed on the outer side in the tire radial direction of the "0 degree" belt layer.
The first belt layer 76L is not divided. The angles formed by cords constituting the first belt layer 76L and cords constituting the second belt layer 76U, respectively, with respect to the tire circumferential direction are the same, which is 15 degrees. The angle formed by cords constituting the outermost belt layer 78 with respect to the tire circumferential direction is 90 degrees, likewise in the Example tire.

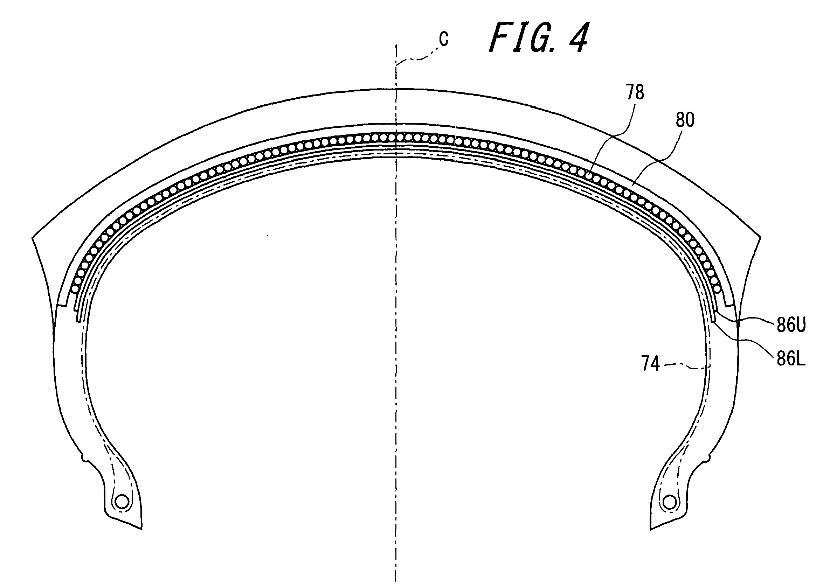

The Conventional Example 2 tire is the same as the Conventional Example 1 tire, except that, as shown in Fig. 4, the first belt layer 76L has been replaced with a first belt layer 86L and the second belt layer 76U has been replaced with a second belt layer 86U.
The angles formed by cords constituting the first belt layer 86L and cords constituting the second belt layer 86U, respectively, with respect to the tire circumferential direction are the same, which is 45 degrees.
The tire conditions of the respective tires are shown in Table 1.

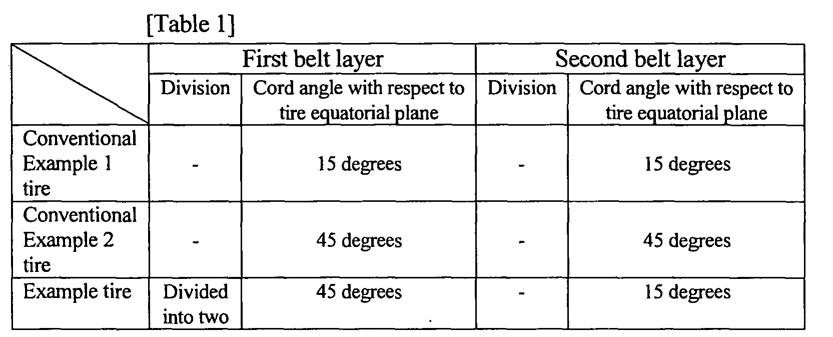

In testing the example tires, each of the tires was mounted, after being assembled with a standard rim, to a 1000 CC motorcycle of super sport type and the motorcycle was made to run in a circuit with the tire inner pressure of 250 kPa. In the present specification, a "standard rim" represents a standard rim in accordance with the application size as prescribed in "Year Book" of 2006 version issued by JATMA.

In testing the example tires, each tire was evaluated with regard to stability in running straight at a relatively high speed, riding comfort in running straight at a relatively high speed, and gripping properties in cornering thereof on the basis of the driver's feelings, with 10 points being full score.
The evaluation results are shown in Table 2.
In the evaluation results in Table 2, higher points represent better performance.

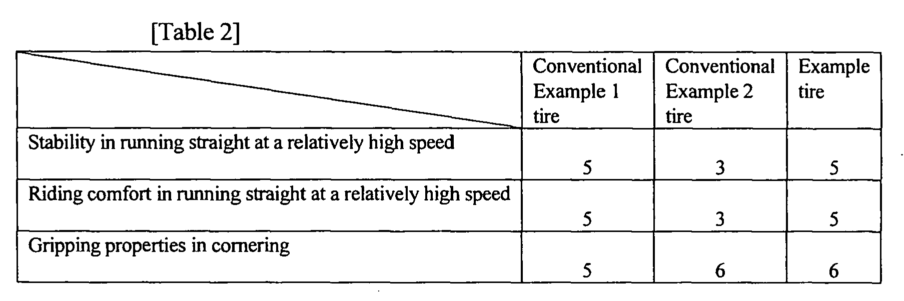

As is known from Table 2, Conventional Example 1 tire was better in stability and riding comfort in running straight at a relatively high speed but worse in gripping properties in cornering than Conventional Example 2 tire.
On the other hand, Conventional Example 2 tire was better in gripping properties in cornering but worse in stability and riding comfort in running straight at a relatively high speed than Conventional Example 1 tire.

Example 1 tire exhibited the same stability and riding comfort in running straight at a relatively high speed as those of Conventional Example 1 tire and the same gripping properties in cornering as those of Conventional Example 2. Accordingly, Example 1 tire was evaluated to be a tire which is excellent in all of stability and riding comfort in running straight at a relatively high speed and gripping properties in cornering.

In the foregoing descriptions, the present invention is described with reference to the embodiments. However, the aforementioned embodiments represent mere examples and these embodiments can be implemented after being modified unless such a modification digresses from the scope of the present invention. Further, needless to say, the scope of rights of the present invention is not restricted to these embodiments.

## Claims

1. A pneumatic tire for a motorcycle, comprising:
a carcass constituted of at least one carcass ply provided in a toroidal shape over a pair of bead cores;
a dual layered slant belt constituted of two cord-crossing layers in which cords of respective layers cross each other, the slant belt being disposed on the outer side in the tire radial direction of the carcass;
an outermost belt layer of which belt has a cord angle of no smaller than 70 degrees with respect to the tire equatorial plane; and
a circumferential direction belt layer provided between the outermost belt layer and the dual layered slant belt and having cords extending substantially in the tire circumferential direction,
wherein at least a first belt layer on the inner side in the tire radial direction of the two layers of the slant belt is divided into two in the tire widthwise direction and thus constituted of two divided portions disposed at respective side portions in the tire widthwise direction of the tire.

2. The pneumatic tire for a motorcycle of claim 1, wherein the respective ends on the tire center side of the respective divided portions of the first belt layer divided into two overlap respective end portions in the tire widthwise direction of the circumferential direction belt layer.

3. The pneumatic tire for a motorcycle of claim 1 or 2, wherein, in the respective divided portions of the first belt layer divided into two, cords of one divided portion are inclined clockwise with respect to the tire equatorial plane, while cords of the other divided portion are inclined anticlockwise with respect to the tire equatorial plane.

4. The pneumatic tire for a motorcycle of claim 3, wherein a cord angle at which the cords of each divided portion, of the first belt layer divided into two, are inclined with respect to the tire equatorial plane is set within a range of 25 to 60 degrees.
